# EUROPEAN PATENT APPLICATION

(11) **EP 3 581 035 A1**
(43) Date of publication of application: **18.12.2019**
(21) Application number: 18020253.3
(22) Date of filing: 13.06.2018
(51) Int. Cl.: A23L 3/3418, A23L 3/3445

(54) **INTEGRATED GAS DELIVERYFREMOVAL SYSTEM**

(71) Applicant: Linde Aktiengesellschaft, 80331 München (DE)
(72) Inventor: Schmehl, Wolfgang, 82031 Grünwald (DE); Senior, Peter Geoffrey, 82065 Baierbrunn (DE); Drott, Kenth, 82069 Hohenschäftlarn (DE); Molnar, Istvan, 6230 Soltvadkert (HU); Wolperdinger, Markus, 06198 Salzatal (DE)

(57) **Abstract**

The present invention pertains to a device for controlling a gaseous mixture comprised in a portable enclosure as well as an enclosure comprising such device and a monitoring system comprising at least one corresponding enclosure. Accordingly, a device (1) for controlling a gaseous mixture (2) comprised in a portable enclosure (10) is suggested, which comprises a gas delivery device (3) for the delivery of at least one gaseous component (20, 22) to the gaseous mixture (2) and/or a gas removal device (4) for the removal of at least one gaseous component (20, 22) from the gaseous mixture (2), a gas monitor device (5) configured to detect at least one parameter (50) relating to the gaseous mixture (2), and a control unit (6) in communication with the gas monitor device (5) to receive the detected parameter and configured to determine an information (60) relating to the gaseous mixture (2) based on the received parameter (50). Furthermore, the control unit (6) is configured to actuate the gas delivery device (3) and/or the gas removal device (4) based on the determined information (60) to control the amount of the gaseous component (20, 22) in the gaseous mixture (2).

## Description

### Technical Field

The invention relates to a device for controlling a gaseous mixture comprised in a portable enclosure, an enclosure including such device, and a monitoring system for monitoring one or more corresponding devices and enclosures.

### Technological Background

For many objects and goods that are stored and/or transported, a controlled environment is generally preferred to ensure that a quality of said objects and goods is maintained. For example, while technical equipment may be subject to wear and/or corrosion or may in general have altered material properties after prolonged storage, medical products require sterility, which may be impaired after extended periods of time and/or exposure to light and/or liquids.

By the same token, human and animal tissue require specific conditions with respect to e.g. humidity, temperature, and gaseous mixtures, to ensure that the respective tissue is preserved.

In these cases, and as equally applicable to many other perishable and non-perishable goods and objects, a prolonged exposure to the ambient atmosphere is generally considered not to be beneficial.

Accordingly, a controlled environment for such goods is often necessary. Whereas such an environment may be provided in stand-alone devices with large capacities of such objects, such environments are generally not available for mobile transportation of such objects. For example, food products are generally transported over large distances and are normally kept only at a required temperature without assessing an actual condition. At best, a humidification or liquid coating may be periodically provided. However, a specific gaseous atmosphere surrounding the objects is neither established nor maintained.

In addition, for small goods an air-tight container may be provided, wherein said container may be filled with a gas such as nitrogen or argon to provide an inert gas and potentially reduce adversary effects from external influences. However, a degradation of e.g. food products may nevertheless occur or a further ripening of products may be required, which is not possible in such sealed environment.

Accordingly, there exists a need to provide a controlled environment inside portable enclosures used for storage or transportation of goods and objects, such that e.g. degradation processes of said goods and objects can be avoided, slowed down, or changed. By the same token, certain physical or chemical processes beneficial for the goods or objects inside such portable enclosure should be maintained, induced, or accelerated, e.g., in case of ripening processes of fruits or in the maintenance of animal tissue. In addition, controllable environments are preferable for storing human and animal tissue, for example, when transporting for transplants.

### Summary of the invention

It is an object of the present invention to provide a device for controlling a gaseous mixture comprised in a portable enclosure, an enclosure including such device, and a monitoring system, which provide an improvement in view of the above problems and in particular provide a desirable gaseous atmosphere and/or composition.

Said object is achieved by a device, an enclosure and a system according to the independent claims. Preferred embodiments are provided in the dependent claims, in the present description and the embodiments as described in view of the Figures.

In a first aspect, a device for controlling a gaseous mixture comprised in a portable enclosure is suggested, which comprises a gas delivery device for the delivery of at least one gaseous component to the gaseous mixture and/or a gas removal device for the removal of at least one gaseous component from the gaseous mixture, a gas monitor device configured to detect at least one parameter relating to the gaseous mixture, and a control unit in communication with the gas monitor device to receive the detected parameter and configured to determine an information relating to the gaseous mixture based on the received parameter. According to the invention, the control unit is furthermore configured to actuate the gas delivery device and/or the gas removal device based on the determined information to control the amount of the gaseous component in the gaseous mixture.

Accordingly, the device may be arranged within an enclosure, preferably as an integral part, or may be coupled to an enclosure by arranging the device at least partially outside of the enclosure. Accordingly, the device is preferably dimensioned to facilitate the portability of an enclosure, i.e. with respect to the size and weight, such that an enclosure comprising said device may preferably be carried by a person. Preferably, the device is configured to be used in a stackable configuration of said enclosure.

The detection of the at least one parameter and the provision of the related information may furthermore be provided continuously or according to a predefined time interval or frequency and is preferably initiated by the control unit. The information may furthermore be provided as multiple informations, wherein the control unit determines the relevant information from the plurality of informations, e.g. from a data set provided to the control unit. Alternatively, the control unit may be configured to determine the relevant information directly at the gas monitor device level by means of a corresponding communication. To ensure that the portable device may be fully autonomous, the device may be equipped with e.g. a chargeable battery or other energy storage device while at the same time a power coupling may be provided for charging of the battery and for long-term usage of the device.

The device may furthermore also be configured as a modular device, such that the device may e.g. comprise, aside from the gas monitor device and the control unit, only a gas removal device, e.g. to ensure that a gaseous component that is undesirable may be removed from the enclosure. Such configuration may also be desirable in cases where an essentially void enclosure or a gaseous atmosphere below atmospheric pressure, i.e. below 1.0 bar, is preferred, and the gas removal device may hence be configured to essentially remove any gaseous component present in the enclosure.

By the same token, the device may also comprise only a gas delivery device, such that the concentration and/or amount of the gaseous component within the enclosure may be increased. The gas delivery device may also be configured to provide a gaseous mixture according to a predefined composition.

Both the gas removal device and the gas delivery device are controlled by the control unit, which hence actuates the respective gas controlling device depending on the received or determined information relating to the measured parameter from the gas monitor device. Preferably both a gas removal device and a gas delivery device are provided, such that an even better control of the gaseous mixture and the gaseous atmosphere comprised within the enclosure may be provided. For example, this has the advantage that an undesirable gaseous component may be removed while at the same time the amount of a desirable gaseous component within the enclosure is increased.

Furthermore, potential chemical reactions may be controlled by the delivery and/or removal of a gaseous component. For example, the gas monitor device may detect the presence of a first gaseous component and provides corresponding information to the control unit. The control unit may then actuate the gas removal device in order to remove said first gaseous component while at the same time actuating the gas delivery device to deliver or provide a second gaseous component, which may e.g. prevent the production or the release of the first gaseous component or may provide a chemical reaction with the first gaseous component to provide a third gaseous component, e.g. an inert gas.

While all components of the device may be arranged within an enclosure, e.g. in the form of an integrated device, it may also be provided that some or even all components are arranged outside of an enclosure. In the latter case, also the gas delivery device and/or the gas removal device may be arranged outside of the enclosure provided that they are in fluid communication with the interior of the enclosure. By the same token, although the gas monitor device is preferably arranged within the enclosure, this is not required. It may also be provided that the gas monitor is in fluid communication with the interior of the enclosure yet is arranged at least partially outside of the enclosure. Even when some of the components are arranged outside of the enclosure, the enclosure is preferably configured as an air-tight container, such that e.g. fluid couplings prevent a direct fluid communication with the atmosphere outside of the enclosure.

Preferably, the enclosure may be configured to store and/or transport an object, wherein the device for controlling a gaseous mixture is configured to preserve or conserve said object. The object, product, or good may preferably be a food product or comprise animal tissue, however, may also comprise, alternatively or in addition, non-perishable goods. For such objects it is generally important that a gaseous atmosphere is controlled to ensure that a stable condition is provided and the longevity of the object is increased.

Accordingly, the gas monitor device preferably comprises a sensor configured for the detection of a volatile organic compound, wherein the parameter comprises a molecular composition of the gaseous mixture. Preferably, the control unit is configured to determine an information relating to a degradation product and/or metabolic waste product based on said parameter. Hence, by means of the sensor, the condition of e.g. an object provided in the enclosure may be assessed. For example, an increase of carbon dioxide may indicate an increased metabolism of a stored organ and may furthermore raise concerns as to the acidity and the level of oxygen within the tissue of said organ.

Accordingly, the device may comprise a gas removal device, such that the control unit may actuate said gas removal device to accordingly reduce the amount of e.g. carbon dioxide. By the same token, the device may comprise a gas delivery device, such that the control unit may actuate said gas delivery device to accordingly increase the amount of e.g. oxygen. Other gaseous components may be chosen, for example, the gas delivery device may also be configured to provide a gaseous mixture, e.g. a medical gas comprising oxygen, nitrogen, carbon dioxide, and/or helium, or provide ozone or similar gases. Hence, by means of the detection of a molecular composition the controller may accordingly actuate at least one gas control device in order to ensure that a desirable gas atmosphere is present within an enclosure and an undesirable condition is counteracted.

Although the sensor preferably is configured to detect a volatile organic compound, other parameters may also be detected, either additionally or alternatively. For example, the parameter may relate to a detected electrical current provided by e.g. enzymatic or catalytic reactions or may relate to a respective charge or acidity due to a composition of the gaseous components. Obviously, other parameters indicating the presence of a gaseous component may be provided.

The gas monitor device, e.g. a sensor as described in the above, may also be combined with the control unit as an integrated monitoring device, such that separated components are not required. For example, the control unit may be provided as either a control logic or as a switch integrated in the gas monitor device, such that the detected parameter may correspond to a predefined information and the monitoring device may hence directly control the respective gas delivery device and gas removal device. Furthermore, the control unit may also be provided as an interface or circuitry between the gas monitor device and the gas delivery device and/or gas removal device, such that electronic components may at least partly be shared between the gas monitor device and the control unit.

In addition, the gas monitor device preferably further comprises a sensor in communication with the control unit and configured to measure a temperature, pressure and/or humidity as a parameter, wherein the control unit is configured to actuate the gas delivery device and/or the gas removal device based on the measured temperature, pressure and/or humidity. The provision of at least a further sensor to measure additional parameters has the advantage that further relevant factors of the gaseous atmosphere may be determined.

For example, an increase in the amount of a gaseous component may at the same time induce an increase of temperature, e.g. when a metabolic rate or degradation rate of a stored object in an enclosure is increased. Furthermore, this may also increase the humidity. Accordingly, an increase in the detected gaseous component and a simultaneous increase in the humidity and/or temperature may provide an even more reliable detection of a condition provided in the enclosure and/or a status of a stored object. Hence, the control unit may accordingly actuate the gas delivery device and/or the gas removal device. The device may also be in communication with and/or comprise a temperature controller or cooling device, which is controllable by the control unit of the device, such that the control unit may also regulate the temperature within an enclosure based on the detected parameters.

In a configuration, wherein the device comprises a gas removal device, the gas removal device may comprise at least one of a scavenger filter, a pump and/or valve arrangement, and a storage container, and/or is configured to release at least a part of the gaseous mixture in the atmosphere. Accordingly, a filter may be configured to adsorb or absorb a gaseous molecular component or may provide a chemical reaction with said component to modify the molecular structure, e.g. to provide an inert and/or non-toxic gas. The gas removal device may also comprise a pump and/or valve arrangement, such that the gaseous component may be conducted to a predefined area, preferably a storage container or a disposal system, e.g. an exterior system, via corresponding fluidic couplings. Alternatively, at least a part of the gaseous mixture may be released into the atmosphere, e.g. by means of an overpressure valve and/or a pumping arrangement, preferably via a filter.

In a configuration, wherein the device comprises a gas delivery device, the gas delivery device may be configured to provide the gaseous component to provide, inhibit, or catalyze a chemical or molecular reaction in the gaseous mixture, wherein the gas delivery device preferably comprises a gas cylinder and/or is in fluid communication with an external gas source to provide the gaseous component. As outlined in the above, this is particularly advantageous when preserving or conserving an object within the enclosure, e.g. a food product or an organ or animal tissue.

The gas delivery device may hence be configured to provide a predefined gaseous mixture or single gaseous component in reaction to the detected parameter, preferably in reaction to a detected molecular composition, e.g. a volatile organic compound. Accordingly, the presence of an undesirable gaseous component may be counteracted by the provision of another gaseous component by the gas delivery device. For example, the presence of lipid radicals or catalytic or reactive compounds may be reduced by a corresponding reduction or similar reactions with the delivered gaseous component.

The delivery of the gaseous component may be provided by a gas cylinder for e.g. short-term provision of the gaseous component. The provision of a gas cylinder has the advantage that the device may be configured as an essentially autonomous device while at the same time having a portable configuration, e.g. when using a correspondingly sized cylinder.

Furthermore, a fluid communication with an external gas source furthermore ensures that e.g. a long-term provision of the gaseous component is ensured while the device may be designed with a more compact configuration, optionally with a small gas cylinder for short-term provision of the gaseous component.

In order to provide a gaseous mixture, said mixture may either be provided as a pre-mixed gaseous mixture or may be provided by the corresponding delivery of each of the respective components, i.e. via a plurality of respective gas delivery units and/or respective gas cylinders and/or respective external sources. Accordingly, different configurations depending on the specific requirements of the device may be provided.

The potentially corresponding increase in pressure within the enclosure may furthermore be prevented by a corresponding venting to the atmosphere, preferably via filter, or by a corresponding storage of excess gas in a container. By the same token, a potentially corresponding change of temperature within the enclosure may be prevented by a corresponding temperature controller, as outlined in the above.

Preferably, the gas delivery device and/or the gas removal device are configured to maintain, provide, or control the gaseous mixture. For example, in case of only a small amount of a gaseous mixture or a void within an enclosure, the gas delivery device may be actuated in order to establish a required and/or predefined gaseous atmosphere. By the same token, a gaseous atmosphere may be maintained, e.g. by a removal and/or addition of the amount of the gaseous mixture. A control of the gaseous mixture may furthermore ensure that e.g. specific chemical reactions are induced or inhibited, for example, via delivery of specific gaseous components. Such control may also be dependent on a predefined time or detected gaseous component, such that e.g. a preserving or conserving may be accordingly controlled.

Furthermore, the control unit is preferably configured to actuate the gas delivery device and/or the gas removal device based on a received information related to an activation status from the gas delivery device and/or the gas removal device. Accordingly, the gas delivery device and/or gas removal device are in communication with the control unit, such that a feedback may be provided relating to the provided or removed amount of at least one gaseous component. Said feedback may also be provided by a flow sensor or timer, which indicate the current and/or total volume of the provided or removed gaseous component. This has the advantage that the control unit may e.g. accordingly adjust the provision or removal of the gaseous component by accordingly adjusting or setting the output or flow rate of the gas delivery device and/or gas removal device while at the same time an actual delivery and/or removal is determined to further ensure the reliability of the device.

To provide a more detailed assessment of the provided information and/or parameters and a larger control flexibility, the control unit preferably comprises an evaluation unit and is preferably configured to actuate the gas delivery device and/or the gas removal device based on a comparison of the determined information with a predefined threshold provided in the control unit, based on a detected change of the determined information, and/or based on a predefined schedule and/or sequence.

For example, the evaluation unit may comprise a threshold value or a database of threshold values comprising a range of tolerance values for respective concentrations of gaseous components that may be detected by the gas monitor device. When the detected concentration is exceeded, said parameter is identified as information that a condition in the respective enclosure does not correspond to a predefined condition and hence an actuation of the gas delivery device and/or gas removal device is provided by the control unit.

By the same token, instead of a comparison with absolute values, the evaluation unit may also detect a change of the detected parameter. For example, a sudden or total increase or decrease may indicate a progressing change of the condition provided in the respective enclosure. Although a threshold of an absolute value may not yet be exceeded, the control unit may also actuate the gas delivery device and/or gas removal device in such a situation in order to anticipate a potential undesirable condition. Furthermore, the change over a predefined time may also be compared with a corresponding threshold change value, such that the control unit may accordingly provide an output, when said threshold is exceeded.

In addition to the actuation of the respective gas controller, the evaluation unit may also output an alarm, e.g. an acoustic and/or visual alarm. In particular, such alarm may be provided in case of a detected change of a respective parameter, which may indicate that an enclosure is e.g. not air-tight or not sufficiently provided with a respective gaseous component.

Furthermore, the evaluation unit may trigger the respective actuation depending on a predefined schedule and/or sequence. For example, the detected parameter may not immediately require an action of the control unit to actuate the respective gas controller. Furthermore, the control unit may also be configured to only actuate the respective gas controller, when a minimum of the respective parameter is detected. For example, the control unit may only actuate the gas delivery device, when a minimum value of the parameter, e.g. a concentration of a molecular compound, is detected and simultaneously the delivery of a specific gaseous component is required according to a predefined sequence or schedule, e.g. after a predefined amount of time. Such an actuation may be advantageous for e.g. the preserving or conserving of food products, wherein, for example, a preserving is required until a predefined amount of time and e.g. a ripening is required after said period of time.

Preferably, the control unit is furthermore configured to provide said actuation in a predefined interval and/or with a predefined gas flow. Such dosage regimens may be e.g. advantageous when storing an organ or tissue, wherein the gaseous atmosphere needs to be maintained in correspondence to predefined physiological conditions, or for controlling a degradation process of e.g. a food product by corresponding timing. Furthermore, this may provide a more controlled usage of the delivered gaseous component by the gas delivery device, potentially reducing the delivered total volume and hence the capacity of e.g. the gas cylinder.

Preferably, the device furthermore comprises a communication device, which is in communication with the control unit and configured to receive and communicate the detected parameter, the determined information, and/or an actuation status and/or actuation log of the gas delivery device and/or the gas removal device to a second device or external monitoring device. Such communication device may be provided as a separate component in communication with the control unit, e.g. to provide a further flexibility of the configuration and arrangement of the respective components, or may be integrated into the control unit, e.g. to provide a more compact configuration or design of the device.

By means of the communication device the detected parameters may be monitored, i.e. either by a second device, e.g. by comparing the detected parameters, or by an external monitoring device. For example, the external monitoring device may be a computer system or a hand-held device, which is capable of receiving and indicating the detected parameters and may accordingly provide an overview of the parameters of a respective enclosure. This is particularly advantageous in case of transportation and/or when using a plurality, i.e. large number of enclosures with respective devices, such that the respective enclosures may be identified and undesirable conditions are detected and accordingly monitored, either automatically or by a user. The communication of e.g. the detected parameter or determined information may be sent periodically or upon demand, e.g. upon a retrieval request by a coupled external monitoring device, and may furthermore be automatically sent upon coupling or after a further verification or authorization step.

By the same token, said parameters may be provided to a second or further device implemented at a respective enclosure and which is configured to receive said parameters or information. Accordingly, a comparison may be provided and e.g. a detection of the respective parameter may be initiated in the second or further device to ensure that a desired condition is maintained in the second or further device in case of e.g. an activation of the gas delivery device and/or gas removal device and/or a detected parameter in the first device.

Furthermore, an external monitoring device may be integrated with at least one of the devices, such that said device may serve as a monitoring device for a plurality of other devices implemented at respective enclosures and hence provides a monitoring of a subset or all of the communicatively connected devices.

Although the device may be configured with a display for monitoring of e.g. the determined information and/or parameters, the external monitoring device may be alternatively or additionally provided, which is particularly advantageous when using a plurality of devices with corresponding enclosures, e.g. when using a large number of stacked enclosures, which may be difficult to access and/or difficult to monitor individually.

Furthermore, the control unit is preferably configured to actuate the gas delivery device and/or the gas removal device based on an input received from a second device or external monitoring device via the communication device. Accordingly, e.g. a parameter detected by a second device may automatically induce a modification of the gaseous atmosphere in an enclosure implemented with the first device to e.g. anticipate a change of the respective gaseous atmosphere or to provide a redundancy, for example, when the gas monitor device of the first device is defect or detects an erroneous value. By the same token, an input from an external monitoring device may be provided, e.g. by a user, to overrule a current actuation of the gas delivery device and/or gas removal device, to manually adjust the gaseous atmosphere of the enclosure of the respective device. For example, the user may provide said input to further increase a preserving or conserving of an object stored in the respective enclosure and/or provide a reset of the condition provided in said enclosure.

Preferably, the communication device is configured to communicate wirelessly with the second device or external monitoring device, preferably via WLAN, Wi-Fi, RFID, Bluetooth, Zigbee, near-field communication, more preferably to a remote location. Accordingly, a variety of configurations depending on the respective requirements may be provided. For example, near-field-communication, NFC, Bluetooth or RFID may be provided for short-distance communication while WLAN and Wi-Fi may be provided for communication over longer distances. The communication device may furthermore be configured to be generally in a stand-by mode and is only activated into a wake mode when a connection is automatically provided, e.g. when a monitoring device is within a predefined distance, and/or according to a predefined frequency. For even further distances and external communications, mobile connections may also be provided, e.g. when shipping devices with corresponding enclosures over large distances, regionally, or internationally.

According to a further aspect of the invention, an enclosure configured for providing a controlled gaseous atmosphere within said enclosure is suggested, wherein the enclosure is configured as a portable enclosure and comprises a device for controlling a gaseous mixture as previously described.

Preferably, the enclosure is configured as a stackable enclosure, more preferably comprising a bottom surface and top surface, which are configured to essentially provide an interference fit or positive locking with the respective other surface in a vertical orientation in a gravitational field. Although the enclosure is preferably not transparent to light, it may be configured to be semitransparent or light permissive for specific spectra, depending on the requirements.

Furthermore, the device for controlling a gaseous mixture is preferably arranged within the enclosure, preferably as an integral part, or is preferably arranged at least partially outside of the enclosure. In order to facilitate the gaseous atmosphere within the enclosure, the enclosure is furthermore preferably configured as an air-tight container.

In addition, the enclosure is preferably configured to store and/or transport an object, wherein the device for controlling a gaseous mixture is preferably configured to preserve or conserve said object. As outlined in the above, said object preferably is a food product or comprises animal tissue, wherein the control of the gaseous atmosphere is of particular importance.

To provide further controllability of the enclosure, the enclosure furthermore preferably comprises a humidity controller and/or temperature controller in communication with the control unit. As outlined in the above, this ensures that the reliability of the device and in particular the detected parameter is increased while at the same time the actuation of the gas delivery device and/or the gas removal device may be dependent on further parameters. For example, the enclosure may comprise or be in fluid communication with a desiccator and/or cooling device, such that aside from the gaseous atmosphere, a stored object may be provided e.g. under dry conditions and with a required cooling, which may be particularly advantageous, with or without a particular light transparency, for e.g. various food products. On the other hand, a high humidity and/or moderate cooling, together with light protection, may be more advantageous when storing an organ or human tissue, such that a humidifier may be provided.

Various advantages and additional optional configurations are furthermore described in the above in view of the corresponding device.

According to a further aspect of the invention, a monitoring system is suggested, which comprises a communication network, preferably a wireless communication network, wherein said monitoring system preferably comprises a computer system and/or database, and wherein the monitoring system comprises at least one enclosure as previously described. Said enclosure comprises a communication device in communication with the control unit and configured to receive and communicate the detected parameter, the determined information, and/or an actuation status and/or actuation log of the gas delivery device and/or the gas removal device to the monitoring system via the communication network.

Accordingly, the communication device, which is preferably comprised in the device for controlling a gaseous mixture coupled to the enclosure, may communicate the respective data or information to a second device or external monitoring device. Accordingly, the monitoring system facilitates that the detected parameters may be monitored, e.g. by a computer system or a hand-held device, which is capable of receiving and indicating the detected parameters and may accordingly provide an overview of the parameters of a respective enclosure. This is particularly advantageous in case of transportation and/or when using a large number of enclosures with respective devices, such that the respective enclosures may be identified and undesirable conditions are detected and accordingly monitored, either automatically or by a user. Such monitoring by the system is hence particularly advantageous when using a plurality of devices with corresponding enclosures, e.g. when using a large number of stacked enclosures, which may be difficult to access and/or difficult to monitor individually and may be monitored all at once or via a respective overview in the monitoring system.

Furthermore, the monitoring system may provide that the control unit is configured to actuate the gas delivery device and/or the gas removal device based on an input received from an external monitoring device of the monitoring system via the communication device. Accordingly, an input from an external monitoring device may be provided, e.g. by a user, to overrule a current actuation of the gas delivery device and/or gas removal device, to manually adjust the gaseous atmosphere of the enclosure of the respective device. For example, the user may provide said input to further increase a preserving or conserving of an object stored in the respective enclosure and/or provide a reset of the condition provided in said enclosure.

### Brief description of the drawings

The present disclosure will be more readily appreciated by reference to the following detailed description when being considered in connection with the accompanying drawings in which:
Figure 1 is a schematic view of a device for controlling a gaseous mixture having a gas delivery device and a gas removal device;
Figure 2 is a schematic view of an exemplary arrangement of a device for controlling a gaseous mixture with an enclosure;
Figure 3 is a schematic view of a device for controlling a gaseous mixture integrated in an enclosure;
Figure 4 is a schematic view of a device for controlling a gaseous mixture in communication with an external monitoring device; and
Figure 5 is a schematic view of a monitoring system with a plurality of devices for controlling a gaseous mixture.

### Detailed description of preferred embodiments

In the following, the invention will be explained in more detail with reference to the accompanying Figures. In the Figures, like elements are denoted by identical reference numerals and repeated description thereof may be omitted in order to avoid redundancies.

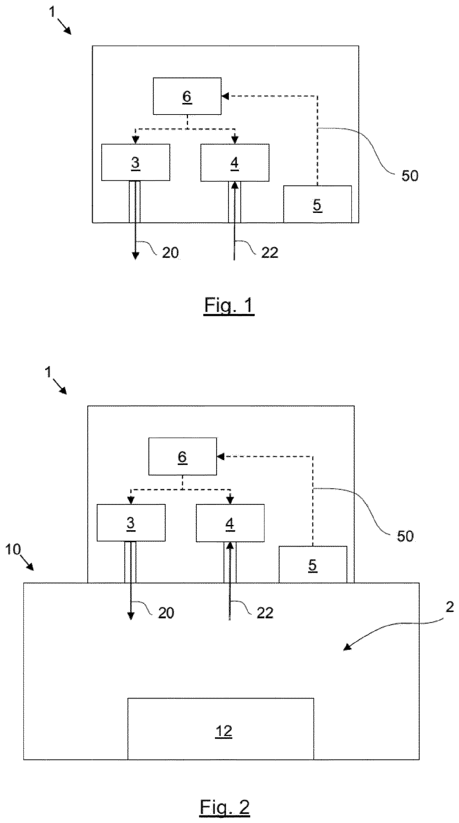

In Figure 1 a device 1 for controlling a gaseous mixture is shown having a gas delivery device 3 and a gas removal device 4. The device 1 may be coupled to an enclosure (not shown), such that a gaseous mixture within said enclosure may be accordingly controlled.

The gas delivery device 3 is fluidly coupled, e.g. via an outlet or conduit, to the exterior of the device 1, such that a first gaseous component 20 may be provided. By the same token, the gas removal device 4 is fluidly coupled to the exterior of the device 1, such that a second gaseous component 22 may be received.

The first gaseous component 20 and the second gaseous component 22 preferably are different gaseous components, such that e.g. desirable gaseous components may be delivered to an enclosure while at the same time undesirable, e.g. toxic components or metabolic waste products, may be removed from the gaseous mixture in the enclosure. However, it may optionally be provided that the first gaseous component 20 and the second gaseous component 22 are the same, e.g. when a volume of the gas is to be remained constant and/or a gaseous component 20, 22 is to be provided at a predefined yet varying concentration for different time points.

The gas delivery device 3 and the gas removal device 4 are actuated by a control unit 6, which is indicated by the arrows and dashed lines in the embodiment according to Figure 1. Accordingly, the gas delivery device 3 and the gas removal device 4 may be automatically controlled and regulated. However, it may optionally be provided that the actuation of the respective device may be provided by means of a manual override, for example, by a respective activation and/or deactivation button on the device 1, or simply by means of a power switch.

The control unit 6 actuates the gas delivery device 3 and the gas removal device 4 depending on a determined information based on the parameter 50 received from or provided by a gas monitor device 5. For example, the control unit 6 may determine a relevant information 50 within a plurality of information provided to the control unit 6 by the gas monitor device 5. Alternatively, the gas monitor device 5 only provides the detected parameter 50 or corresponding value to the control unit 6, wherein the information is determined on the control unit 6 level.

Said gas monitor device 5 may be fluidly coupled to or be integrated in an enclosure and is configured to detect a parameter 50 relating to the gaseous mixture comprised within an enclosure. In the present embodiment, the gas monitor device 5 comprises a sensor, which is configured for the detection of a volatile organic compound, wherein the parameter 50 hence comprises a molecular composition of the gaseous mixture. Accordingly, the information, which is determined by the control unit 6 relates to a degradation product and/or metabolic waste product.

Accordingly, the device 1 may control e.g. a process or a condition within a coupled enclosure by means of the detected parameter 50 and the corresponding determined information and the actuation of both the gas delivery device 3 and the gas removal device 4.

An exemplary arrangement of a device 1 for controlling a gaseous mixture 2 with an enclosure 10 is schematically depicted in Figure 2. The device 1 generally resembles the device 1 according to Figure 1, such that the general functioning of the device is not described in further detail. The device 1 is arranged at an exterior side of the enclosure 10, wherein the gas delivery device 3 and the gas removal device 4 are fluidly coupled to the interior of the enclosure 10 by means of respective connectors and/or valves (not shown). Accordingly, a first gaseous component 20 may be delivered and a second gaseous component 22 may be removed by the respective actuation of the gas delivery device 3 and the gas removal device 4, depending on the determined information.

By the same token, the gas monitor device 5 is also fluidly connected to the enclosure 10 by similar means. However, it may optionally be provided that the gas monitor device 5 comprises a detection unit such as e.g. a sensor in form of an electrode arrangement, which is arranged within the interior of the enclosure 10 and wherein the gas monitor device 5 is only electrically coupled to the said detection unit by means of e.g. a plug and socket or electromagnetic coupling.

By the same token, it may be optionally provided that at least one of the components of the device 1 is arranged within the enclosure 10, as described in further detail in the below embodiments.

Within the enclosure 10 an object 12 is stored, such that the gaseous atmosphere surrounding the object 12 may be accordingly controlled by actuation of the gas delivery device 3 and the gas removal device 4. The object 12 may generally comprise any object 12 to be stored and/or requiring a specific gaseous atmosphere, however, preferably comprises a food good or animal tissue. According to the embodiment of Figure 2, the object 12 is an organ. Hence, other components may also be provided, such as e.g. a cooling or temperature controller and/or perfusion device (not shown). In general, the enclosure 10 is hence configured to be transportable and portable, such that the combined device 1 and enclosure 10 may be carried by a person.

The arrangement of the device 1 at the exterior of the enclosure 10 may be particularly advantageous when transporting animal tissue such as an organ, which need to be kept in a fully sterile environment yet may require a manual override or exchange of components during transportation. Accordingly, the separate arrangement facilitates both the maintenance of the sterile environment while at the same time allowing a modification of the device 1. However, organs or animal tissue may obviously be also stored in an enclosure 10 having a different arrangement of a coupled device 1. An arrangement of the device 1 outside of the enclosure 10 furthermore facilitates that the enclosure 10 may be kept relatively simple and the device 1 may be adapted to various enclosures, thereby increasing the versatility.

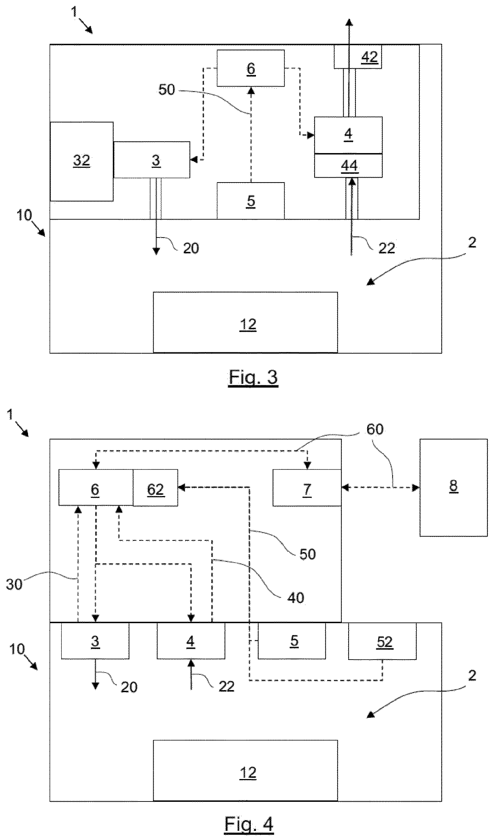

In Figure 3 a device 1 for controlling a gaseous mixture 2 in an enclosure 10 is schematically shown, wherein the device 1 is integrated in the enclosure 10. As outlined in the above in view of the embodiments according to Figures 1 and 2, the actuation of the gas delivery device 3 and the gas removal device 4 is provided by the control unit 6, depending on the determined information from the received parameter 50 from the gas monitor device 5.

In addition, the gas delivery device 3 comprises a gas cylinder 32, which may provide the first gaseous component 20 required for the gaseous mixture 2 in the enclosure 10. The gas cylinder 32 is arranged at an outer surface of the device 1, such that the gas cylinder 32 may be easily replaced and/or different gas cylinders 32 may be coupled to the device 1, depending on the requirements of the enclosure 10. Accordingly, the gas cylinder 32 may be configured as a gas cartridge or canister, which comprises e.g. a connector or valve arrangement for fluid coupling with the gas delivery device 3 and the interior of the enclosure 10. The gas delivery device 3 may e.g. be configured to provide a predefined volume and/or may comprise a pump to deliver the first gaseous component 20.

Furthermore, the gas removal device 4 comprises a pump and valve arrangement 44 in order to remove a second gaseous component 22 from the gaseous mixture 2 and release said gaseous component to the atmosphere or to an external collection device (not shown). In order to provide a specificity of the second gaseous component 22, the gas removal device 4 furthermore comprises a filter 42, which is arranged to be in fluid communication with the interior of the enclosure 10, e.g. by a respective conduit. Accordingly, the filter 42 may provide that only a specific range of second gaseous components 22 may pass said filter, such that they may be accordingly removed by means of the coupled pump and valve arrangement 44. However, the filter 42 may also be optional, such that the gaseous mixture 2 in general is at least partly removed from the enclosure 10 by means of the gas removal device. In addition, it may also be provided that the filter 42 filters a second gaseous component 22, e.g. toxic components, prior to releasing the gaseous mixture 2 into the atmosphere. Accordingly, a variety of configurations are possible.

The integrated configuration of the device 1 in the enclosure 10 is particularly advantageous when storing an object 12 in form of a food product. However, other goods, both perishable and non-perishable, or animal tissue, such as organs, may be stored in the enclosure 10 with an integrated device 1, depending on the requirements.

By the same token, although the enclosure 10 is configured to be portable, it may also be configured to store or transport larger volumes or quantities of the object 12, such that the enclosure 10 may also assume larger dimensions.

A combination of the device 1 and an enclosure 10, wherein several components of the device 1 are arranged within the enclosure 10 is shown in an exemplary embodiment according to Figure 4. Hence, the device 1 may generally comprise any of the features according to any of the Figures 1 to 3 with the corresponding configuration and/or function.

According to the embodiment depicted in Figure 4, the device 1 comprises a gas delivery device 3, a gas removal device 4, and a gas monitor device 5, which are arranged within the enclosure 10. The respective components are in communication with the control unit 6, for example, by means of an electrical, electromagnetic, and/or mechanical coupling, such that the gas monitor device 5 may communicate the at least one parameter 50 or a set of information relating to the gaseous mixture 2 comprised within the enclosure 10 to the control unit 6.

By the same token, the gas delivery device 3 and the removal device 4 are in communication with the control unit 6, such that they can be individually actuated and deliver the first gaseous component 20 or remove the second gaseous component 22 from the gaseous mixture 2, respectively.

The control unit 6 furthermore comprises an evaluation unit 62, which is configured to compare the determined information 60 with a threshold stored in the evaluation unit 62 and/or may be configured to monitor the value of the information 60 in order to detect a change of the information 60. Accordingly, the control unit 6 may actuate the gas delivery device 3 and/or the gas removal device 4 only when the evaluation unit 62 detects that a threshold is exceeded or a change of the information 60 exceeds a predefined value. For example, the gas delivery device 3 may be actuated when a minimal concentration of a molecular compound is exceeded, indicating that an addition of the first gaseous component 20 is required. By the same token, a rapid change, i.e. a large change level, may indicate a malfunctioning or a developing condition, such that the control unit 6 may also anticipate any undesirable condition or process within the enclosure 10. Accordingly, the evaluation unit 62 provides a control logic for the control unit 6.

Furthermore, the control unit 6 is configured to receive an actuation status information 30 from the gas delivery device 3 and an actuation status information 40 from the removal device 4. This has the advantage that a feedback is provided, e.g. a current setting or level of a respective storage container or cylinder, while at the same time a monitoring of the respective device may be implemented.

By the same token, the device 1 comprises an additional sensor 52, e.g. a temperature sensor, arranged within the enclosure 10, which provides additional information or an additional parameter to the control unit 6, as indicated by the dashed arrow in Figure 4. Said parameter or information may be provided to the control unit 6, or to the subunit of the control unit 6, i.e. the evaluation unit 62 directly, and may be accordingly evaluated in addition to the information 60 to actuate the gas delivery device 3 or gas removal device 4.

In addition, the device 1 comprises a communication device 7, which is in communication with the control unit 6 and allows a communication between the device 1 and an external monitoring device 8. Although various configurations may be provided, the communication device 7 according to the embodiment is provided as a wireless communication device using RFID for short-distance communication.

The external monitoring device 8 is configured as a hand-held device, preferably a PDA, notebook, or mobile phone, which comprises a display.

When the external monitoring device 8 is brought into proximity with the device 1, a communication is established between said device 1, preferably automatically. With the established communication, the device 1 is capable of communicating or transmitting various stored parameters 50 and informations 30, 40, 60 from the control unit 6 to the external monitoring device 8 and may also receive an input from the external monitoring device 8 via the communication device 7, indicated exemplary in Figure 4 by the dashed arrows and the information 60. Accordingly, a user may be provided with an overview of a current status of the device 1 and the enclosure 10 to monitor a condition or process of an object 12 stored in the enclosure 10 on the external monitor device 8, e.g. on a display. In case of a system error or an undesirable condition the communication device 7 may also trigger an alarm, such that a user may provide a corresponding input via the external monitor device, the communication device 7, and the control unit 6 to remedy the undesirable condition.

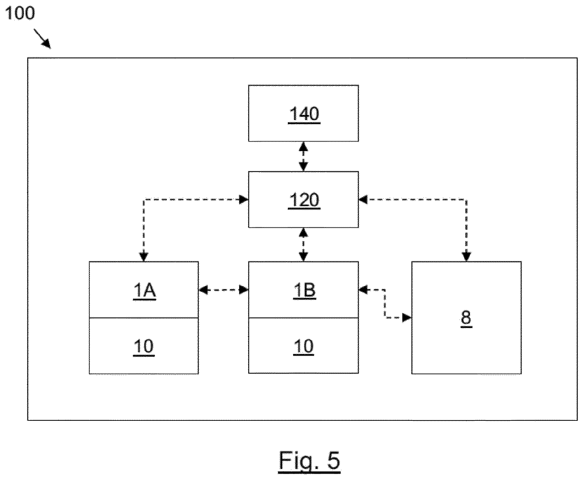

In Figure 5 a schematic view of a monitoring system 100 with a plurality of devices 1A, 1B for controlling a gaseous mixture is shown.

The monitoring system 100 is depicted comprising a first device 1A and a second device 1B each coupled to a respective enclosure 10. The devices 1A, 1B and enclosures 10 may be configured according to any of the embodiments described in Figures 1 to 4, and may have alternative configurations as described in the general description. Furthermore, the monitoring system 100 may comprise more than two devices, e.g. a plurality of devices or even a large number of stacked devices.

To provide a monitoring, the system 100 comprises a computer system 140 having a storage in form of a database, optionally in the form of a cloud storage. Accordingly, the system 100 is provided with an overview of the respective devices 1A, 1B and configurations, such that the respective devices may be accordingly identified and compared with predefined conditions.

The devices 1A, 1B are in bi-directional communication with the computer system 140 via a wireless communication network 120, such that a seamless communication may be provided and may easily be extended according to the respective requirements. However, other communication networks using e.g. LAN may be provided. Accordingly, the computer system 140 may receive the determined information, and/or an actuation status and/or actuation log of the gas delivery device and/or the gas removal device to the monitoring system via the communication network 120.

By the same token, the computer system 140 of the monitoring system 100 may provide an input to the respective device 1A, 1B, e.g. to overrule an actuation status provided by the control unit 6.

In addition, an external monitoring device 8 is provided in the system 100, which is in communication with the second device 1B via e.g. RFID, preferably automatically, when being in proximity. Preferably, the external monitoring device 8 is configured as a hand-held device, e.g. a PDA. Accordingly, the established communication between the communication device of the second device 1B and the external monitoring device 8 allows that e.g. the information from the second device 1 B may be transmitted to the external monitoring device 8. A user may identify the information via an indication on a display of the PDA, such that the user may decide whether an overrule of the respective control unit may be required.

Furthermore, the first device 1A is in communication with the second device 1B, wherein only the second device 1B is in communication with the PDA. Accordingly, the second device 1B may also communicate an information from the first device 1A to the PDA, such that a user may be provided with a respective overview. In case of an error or undesirable condition, the user may then provide a direct feedback to the computer system 140 via the communication network 120, such that the computer system 140 may provide a corresponding input to the first device 1A.

Such configuration has the advantage that the e.g. a periodic communication and monitoring of each device 1A, 1B is provided by means of the communication network 120 and the computer system 140, while at the same time an intermediate control or check-up may be provided via the external monitoring device 8 or PDA. However, the PDA may also be configured to only communicate with a subset of the respective devices, which corresponds to device 1 B according to Figure 5. Hence, the second device 1B may serve as an external monitoring device for a subset of devices, such that the PDA does not need to communicate with each device individually, but may automatically retrieve the information from the plurality of devices upon establishing a communication with the second device 1B. Obviously, other configurations may be provided, as outlined in the above.

It will be obvious for a person skilled in the art that these embodiments and items only depict examples of a plurality of possibilities. Hence, the embodiments shown here should not be understood to form a limitation of these features and configurations. Any possible combination and configuration of the described features can be chosen according to the scope of the invention.

### List of reference numerals

- 1: Device for controlling a gaseous mixture
- 1A: First device
- 1B: Second device
- 10: Portable enclosure
- 12: Object
- 100: Monitoring system
- 120: Communication network
- 140: Computer system
- 2: Gaseous mixture
- 20: First gaseous component
- 22: Second gaseous component
- 3: Gas delivery device
- 30: Information
- 32: Gas cylinder
- 4: Gas removal device
- 40: Information
- 42: Pump and valve arrangement
- 44: Filter
- 5: Gas monitor device
- 50: Parameter
- 52: Additional sensor
- 6: Control unit
- 60: Information
- 62: Evaluation unit
- 7: Communication device
- 8: External monitoring device

## Claims

1. Device (1) for controlling a gaseous mixture (2) comprised in a portable enclosure (10), preferably a transportation enclosure, the device comprising:
- a gas delivery device (3) for the delivery of at least one gaseous component (20, 22) to the gaseous mixture (2) and/or a gas removal device (4) for the removal of at least one gaseous component (20, 22) from the gaseous mixture (2);
- a gas monitor device (5) configured to detect at least one parameter (50) relating to the gaseous mixture (2); and
- a control unit (6) in communication with the gas monitor device (5) to receive the detected parameter (50) and configured to determine an information (60) relating to the gaseous mixture (2) based on the received parameter (50);
wherein the control unit (6) is configured to actuate the gas delivery device (3) and/or the gas removal device (4) based on the determined information (60) to control the amount of the gaseous component (20, 22) in the gaseous mixture (2).

2. Device (1) according to claim 1, wherein the gas monitor device (5) comprises a sensor configured for the detection of a volatile organic compound and wherein the parameter (50) comprises a molecular composition of the gaseous mixture (2), wherein the control unit (6) is preferably configured to determine an information (60) relating to a degradation product and/or metabolic waste product based on said parameter (50).

3. Device (1) according to claim 2, wherein the gas monitor device (5) further comprises a sensor (52) in communication with the control unit (6) and configured to measure a temperature, pressure and/or humidity as a parameter, wherein the control unit (6) is configured to actuate the gas delivery device (3) and/or the gas removal device (4) based on the measured temperature, pressure and/or humidity.

4. Device (1) according to any of the preceding claims, wherein the device (1) comprises a gas removal device (4), wherein the gas removal device (4) comprises at least one of a scavenger filter (42), a pump and/or valve arrangement (44), and a storage container, and/or is configured to release at least a part of the gaseous mixture (2) in the atmosphere.

5. Device (1) according to any of the preceding claims, wherein the device (1) comprises a gas delivery device (3), wherein the gas delivery device (3) is configured to provide the gaseous component (20, 22) to provide, inhibit, or catalyze a chemical or molecular reaction in the gaseous mixture (2), wherein the gas delivery device (3) preferably comprises a gas cylinder (32) and/or is in fluid communication with an external gas source to provide the gaseous component.

6. Device (1) according to any of the preceding claims, wherein the gas delivery device (3) and/or the gas removal device (4) are configured to maintain, provide, or control the gaseous mixture (2), wherein the control unit (6) is preferably configured to actuate the gas delivery device (3) and/or the gas removal device (4) based on a received information (30, 40) related to an activation status from the gas delivery device (3) and/or the gas removal device (4).

7. Device (1) according to any of the preceding claims, wherein the control unit (6) comprises an evaluation unit (62) and is configured to actuate the gas delivery device (3) and/or the gas removal device (4) based on a comparison of the determined information (60) with a predefined threshold provided in the control unit (6), based on a detected change of the determined information (60), and/or based on a predefined schedule and/or sequence, wherein the control unit (6) is preferably furthermore configured to provide said actuation in a predefined interval and/or with a predefined gas flow.

8. Device (1) according to any of the preceding claims, wherein the device (1) furthermore comprises a communication device (7) in communication with the control unit (6) and configured to receive and communicate the detected parameter (50), the determined information (60), and/or an actuation status and/or actuation log of the gas delivery device (3) and/or the gas removal device (4) to a second device (1B) or external monitoring device (8).

9. Device (1) according to claim 8, wherein the control unit (6) is furthermore configured to actuate the gas delivery device (3) and/or the gas removal device (4) based on an input received from a second device (1B) or external monitoring device (8) via the communication device (7).

10. Device (1) according to claim 8 or 9, wherein the communication device (7) is configured to communicate wirelessly with the second device (1B) or external monitoring device (8), preferably via WLAN, Wi-Fi, RFID, Bluetooth, Zigbee, near-field communication, more preferably to a remote location.

11. Enclosure (10) configured for providing a controlled gaseous atmosphere within said enclosure (10), wherein the enclosure (10) is configured as a portable enclosure (10) and comprises a device (1) for controlling a gaseous mixture (2) according to any of the claims 1 to 10.

12. Enclosure (10) according to claim 11, wherein the device (1) for controlling a gaseous mixture (2) is arranged within the enclosure (10), preferably as an integral part, or is arranged at least partially outside of the enclosure (10), and wherein the enclosure (10) is preferably configured as an air-tight container.

13. Enclosure (10) according to claim 11 or 12, wherein the enclosure (10) is configured to store and/or transport an object (12), wherein the device (1) for controlling a gaseous mixture (2) is configured to preserve or conserve said object (12), said object (12) preferably being a food product or comprising animal tissue.

14. Enclosure (10) according to any of the claims 11 to 13, wherein the enclosure (10) furthermore comprises a humidity controller and/or temperature controller in communication with the control unit (6).

15. Monitoring system (100) comprising a communication network (120), preferably a wireless communication network, said monitoring system (100) preferably comprising a computer system (140) and/or database, wherein the monitoring system (100) comprises at least one enclosure (10) according to any of the claims 11 to 14, said enclosure (10) comprising a communication device (7) in communication with the control unit (6) and configured to receive and communicate the detected parameter (50), the determined information (60), and/or an actuation status and/or actuation log of the gas delivery device (3) and/or the gas removal device (4) to the monitoring system (100) via the communication network (120).
